# FASCICULE DE BREVET EUROPEEN

(11) **EP 1 997 664 B1**
(45) Date de publication et mention de la délivrance du brevet: **08.12.2010**
(21) Numéro de dépôt: 08157137.4
(22) Date de dépôt: 29.05.2008
(51) Int. Cl.: B60K 15/00

(54) **Réservoir pour véhicule automobile**
Behälter für Kraftfahrzeug
Tank for automobile

(30) Priorité: 29.05.2007 FR 0755319
(43) Date de publication de la demande: 03.12.2008
(73) Titulaire: COMPAGNIE PLASTIC OMNIUM, 69007 Lyon (FR)
(72) Inventeur: Pommier, Arnaud, 71500, Louhans (FR)
(74) Mandataire: Thiollier, Clémence-Olivia Laure Marie

(56) Documents cités:
- EP-A- 0 018 240
- EP-A- 0 033 576
- EP-A- 0 903 254
- EP-A- 1 731 590
- DE-A1- 2 736 127
- DE-A1- 19 605 702

## Description

La présente invention concerne un réservoir pour véhicule automobile. Elle concerne en particulier, mais non exclusivement, un réservoir de d'additif pour filtre à particules, destiné à être monté sur un véhicule industriel.

On connaît déjà un tel réservoir dans l'état de la technique. Il a généralement pour fonction de contenir un catalyseur, destiné à agir dans un filtre à particules, afin de provoquer, dans ce filtre, la combustion de particules imbrûlées contenues dans les gaz d'échappement d'un moteur diesel, dans le but de réduire leur pollution.

On sait que ce type de réservoir est obtenu par un procédé de réalisation de corps creux, tel que le soufflage ou le roto-moulage. De tels procédés permettent de réaliser un corps creux quasiment fermé dont l'intérieur, destiné à recevoir le liquide, est très peu accessible, si bien que l'on rapporte le moins possible d'éléments à l'intérieur. Notamment, pour fixer le réservoir sur un support du véhicule, on cherche à utiliser des moyens n'ayant aucun contact avec l'intérieur du réservoir. Ainsi, on prévoit des logements de réception d'organes de fixation, délimités exclusivement par la paroi externe du réservoir (c'est-à-dire la paroi n'étant pas en contact avec le liquide lorsque le réservoir est rempli), par exemple sous forme d'oeillets ménagés en saillie de la surface externe du réservoir, tout autour d'une face d'appui du réservoir contre le support. Ces oeillets sont percés et permettent par exemple le passage de tiges filetées, pour fixer le réservoir sur le support voir par exemple EP 0903254.

La difficulté réside dans le fait que ces logements de réception sont ménagés en saillie du réservoir, tout autour de la face d'appui, ce qui nuit à sa compacité.

La présente invention vise à proposer un réservoir plus compact.

A cet effet, l'invention a pour objet un réservoir pour véhicule automobile, caractérisé en ce qu'il comporte une face d'appui du réservoir contre un support du véhicule et une face latérale adjacente à la face d'appui, le réservoir comportant en outre une cavité pour la réception d'un organe de fixation du réservoir sur le véhicule, configurée de façon que :
- la cavité débouche sur la face latérale du réservoir, et
- la cavité débouche également sur la face d'appui, pour permettre à l'organe de fixation de dépasser de la face d'appui, en étant retenu dans la cavité.

Ainsi, le réservoir présente, grâce à la cavité, ou évidement, que l'on appellera "cavité de fixation", un logement de réception de l'organe de fixation, sans pour autant présenter de saillies disposées autour de la face d'appui, en saillie de la face latérale. Le réservoir est donc plus compact : on diminue l'espace à réserver autour du réservoir pour son montage sur le support, ainsi que la surface à réserver sur le support pour la fixation du réservoir.

Cette compacité est particulièrement intéressante dans le cas où le réservoir est un réservoir d'additif pour filtre à particules, de préférence un catalyseur, monté sur un véhicule industriel (camion, autobus...) qui n'était pas destiné, au moment de sa mise dans le commerce, à être équipé d'un tel réservoir. En effet, dans ce cas, le véhicule industriel ne dispose pas d'un emplacement spécifiquement prévu pour le réservoir et il est donc nécessaire de fournir un réservoir particulièrement compact, capable d'être monté dans un espace restreint. Bien entendu, on comprendra que le réservoir peut également être monté en série sur un véhicule, avant sa mise dans le commerce, et peut par ailleurs être monté aussi bien sur un véhicule industriel que sur une voiture.

Un autre avantage réside dans le fait qu'il peut être plus facile, lors du moulage du réservoir, notamment dans le cas d'un moulage par roto-moulage ou par soufflage, de prévoir une cavité rentrante dans des parois du réservoir plutôt que des parties saillantes, d'autant plus que ces parties saillantes doivent être particulièrement solides pour assurer la fixation du réservoir sur le véhicule.

En outre, comme l'organe de réception peut être intégralement reçu dans la cavité du réservoir, ce dernier constitue une coque de protection de l'organe de fixation.

De préférence, l'extrémité de la cavité débouchant sur la face latérale, appelée extrémité latérale de la cavité, et l'extrémité de la cavité débouchant sur la face d'appui, appelée extrémité d'appui, s'étendent chacune jusqu'à l'arête du réservoir formée par la face latérale et la face d'appui. Ainsi, il est possible d'insérer l'organe de réception dans la cavité par un déplacement de l'organe de fixation selon la direction orthogonale à la face latérale, ce qui permet une insertion aisée de l'organe de réception, tout en lui procurant une protection efficace une fois qu'il est logé dans la cavité de réception.

Le réservoir peut en outre comporter l'une ou plusieurs des caractéristiques suivantes.
- La cavité de fixation débouche également sur une face du réservoir opposée à la face d'appui, dite face avant. Cette configuration offre en outre la possibilité d'insérer l'organe dans la cavité de fixation depuis la face avant du réservoir dans une direction appelée direction d'appui. Un avantage de cette configuration réside dans le fait que l'on peut insérer l'organe de fixation dans la cavité une fois que le réservoir est positionné en appui contre le support sur lequel il est destiné à être fixé. Ainsi, l'espace nécessaire sur le véhicule pour le montage du réservoir seul, puis pour le montage de l'organe de fixation, est plus petit que l'espace nécessaire pour monter le réservoir pré-équipé de l'organe de fixation, lequel dépasse de la face d'appui du réservoir. En outre, il est possible de retirer l'organe de fixation de la cavité tout en laissant le réservoir dans sa position d'appui, si bien que l'on peut par exemple remplacer un organe de fixation sans pour autant avoir à démonter tout le réservoir du véhicule. On notera également que la réalisation d'une cavité s'étendant depuis la face d'appui jusqu'à la face avant peut être aisée en ce qui concerne le démoulage.
- La cavité de fixation comprend un siège assurant la rétention de l'organe de fixation dans la direction d'appui du réservoir. Ce siège a pour fonction de servir de butée à une extrémité de l'organe de fixation, l'extrémité opposée pouvant traverser un orifice du support et servir d'élément de vissage.
- Le réservoir comprend, de préférence sur sa face d'appui, une cavité, dite "cavité de pompe", pour la réception d'une pompe apte à prélever du liquide dans le réservoir. Ainsi, la pompe peut être intégralement logée dans la cavité et donc ne pas être montée en saillie du réservoir, ce qui diminue encore l'espace nécessaire autour du réservoir sur le véhicule. En outre, la pompe bénéficie de la cavité de pompe en tant que protection. Par ailleurs, dans le cas où cette cavité de pompe est ménagée sur la face d'appui du réservoir, la cavité peut être refermée par la face d'appui, de façon à fournir un logement quasiment fermé protégeant la pompe et l'isolant de poussières extérieures.
- La cavité de pompe comprend des moyens de fixation d'un collier de fixation de la pompe dans la cavité. Ainsi, non seulement la pompe est logée dans la cavité de pompe, mais on dispose également d'un logement pour le collier de fixation, si bien que celui-ci n'est pas non plus monté en saillie du réservoir, ce qui améliore à la fois la compacité du réservoir et la protection de l'organe de fixation, donc la fixation de la pompe sur le réservoir.
- Le réservoir comporte en outre une cavité, dite "cavité de câblage", pour la réception de câblages électriques ou hydrauliques, et éventuellement pour la réception de connecteurs. Ainsi, de même que dans le cas de la cavité de pompe, on dispose d'un réservoir compact et d'une protection de ces câblages et/ou du connecteur. En outre, on peut ainsi loger à la fois la pompe, les câbles d'alimentation de cette pompe et les connecteurs de la pompe au véhicule, sans pour autant présenter de saillies à la surface du réservoir.
- Le réservoir, comprenant une première et une deuxième faces latérales, toutes deux adjacentes à la face d'appui, comprend au moins quatre cavités de fixation, débouchant chacune sur la face d'appui et l'une des première ou deuxième faces latérales.
- Le réservoir est un réservoir d'additif pour filtre à particules, destiné à être monté sur un véhicule industriel. Un tel réservoir est particulièrement intéressant dans le cas d'un véhicule industriel qui n'était pas destiné, au moment de sa mise dans le commerce, à être équipé d'un tel réservoir. En effet, le véhicule ne dispose alors pas d'un emplacement spécifiquement prévu pour le réservoir. Ainsi, le réservoir compact défini ci-dessus permet d'utiliser un additif pour filtre à particules même sur un véhicule, tel qu'un camion ou un autobus, qui n'était pas configuré initialement pour cette utilisation.

L'invention a également pour objet l'ensemble d'un réservoir tel que défini ci-dessus et d'un organe de fixation, dans lequel l'organe de fixation arrive à affleurement avec la face latérale, ou, du moins, ne forme pas une saillie de la face latérale, et éventuellement avec la face avant du réservoir.

Cet ensemble peut en outre comporter l'une ou plusieurs des caractéristiques suivantes.
- L'ensemble comprend des moyens anti-vibratoires, agencés entre l'organe de fixation et le réservoir. Grâce à ces moyens anti-vibratoires, tels que des éléments en élastomère, les vibrations du moteur du véhicule ne sont pas transmises au réservoir. Ce cas est intéressant lorsque la pompe est logée dans une cavité du réservoir, du fait que les vibrations du véhicule ne sont pas transmises à la pompe, ce qui allonge sa durée de vie.
- L'organe de fixation comprend une tige dont une extrémité est destinée à traverser le support, la tige étant traversée au moins un plot anti-vibratoire en matériau élastomère destiné à être agencé entre un siège d'appui du réservoir et le support.

L'invention a en outre pour objet l'ensemble d'un réservoir tel que défini ci-dessus et d'une pompe, dans lequel la pompe arrive à affleurement avec une face du réservoir (du moins, ne fait pas saillie), de préférence la face d'appui.

L'invention a par ailleurs pour objet l'ensemble d'un réservoir tel que défini ci-dessus et de câblages électriques ou hydrauliques, dans lequel les câblages arrivent à affleurement avec une face du réservoir (du moins, ne font pas saillie), notamment de la face d'appui.

Dans ces deux cas en particulier, la pompe et les câblages sont protégés par le réservoir.

L'invention sera mieux comprise à la lecture de la description qui va suivre, donnée uniquement à titre d'exemple et faite en se référant aux dessins dans lesquels :
- la figure 1 est une vue en perspective d'un réservoir selon un mode de réalisation de l'invention, monté sur un support d'un véhicule ;
- la figure 2 est une vue en perspective arrière de dessous du réservoir de la figure 1 ;
- la figure 3 est une vue en perspective arrière d'un réservoir selon une variante du mode de réalisation de la figure 1 ; et
- la figure 4 est une vue en perspective avant du réservoir de la figure 3 monté sur un support.

On a représenté sur les figures un réservoir 10 d'additif, plus précisément de catalyseur, pour filtre à particules. Ce réservoir 10 est destiné à être monté sur un véhicule industriel qui n'était pas équipé, lors de sa mise dans le commerce, d'un tel réservoir de catalyseur. En effet, le réservoir 10 peut être monté au cours de la vie du véhicule, afin de diminuer la présence de particules imbrûlées contenues dans les gaz d'échappement du véhicule. On notera que l'utilisation d'un catalyseur est particulièrement intéressante dans un véhicule destiné à faire beaucoup d'arrêts lors de son fonctionnement (par exemple s'il roule en ville), du fait que, à l'arrêt, il est difficile d'accumuler suffisamment d'énergie pour chauffer un filtre à particules, et l'utilisation d'un catalyseur permet de baisser la température de combustion.

Bien entendu, le réservoir 10 peut être aussi monté sur un véhicule quelconque, lors de son assemblage en série.

Un exemple de catalyseur pouvant être stocké dans le réservoir 10 est celui commercialisé sous la marque Eolys par la société Rhodia.

Le réservoir 10 est particulièrement compact et peut être monté sur un support 12, en forme de plaque oblongue, appartenant au véhicule ou rapporté sur une pièce du véhicule.

Le réservoir 10 comporte une face 14 d'appui contre le support 12, une face avant 16, opposée à cette face d'appui 14, une première 18 et une seconde 20 faces latérales verticales, une troisième 22 face latérale horizontale inférieure et une quatrième 24 face latérale horizontale supérieure. Les faces latérales 18, 20, 22 et 24 sont chacune adjacentes à la face d'appui 14 et à la face avant 16, de façon à former un réservoir globalement parallélépipédique, bien que ses arêtes soient arrondies, et qu'il comporte quelques saillies, notamment un orifice de vidange 26 sur la face inférieure 22, une saillie de dépressurisation 28 sur la face supérieure 24, un orifice de remplissage 30, voire un orifice de débord 31.

Le réservoir 10 comporte quatre cavités 32 pour la réception d'organes de fixation 34, ces organes 34 permettant de fixer le réservoir 10 sur le support 12. Chacune des cavités 32 débouche sur l'une des faces latérales 18, 20 et également sur la face d'appui 14, de façon à permettre à l'organe de fixation 34 de dépasser de la face d'appui 14, en étant retenu dans la cavité 32.

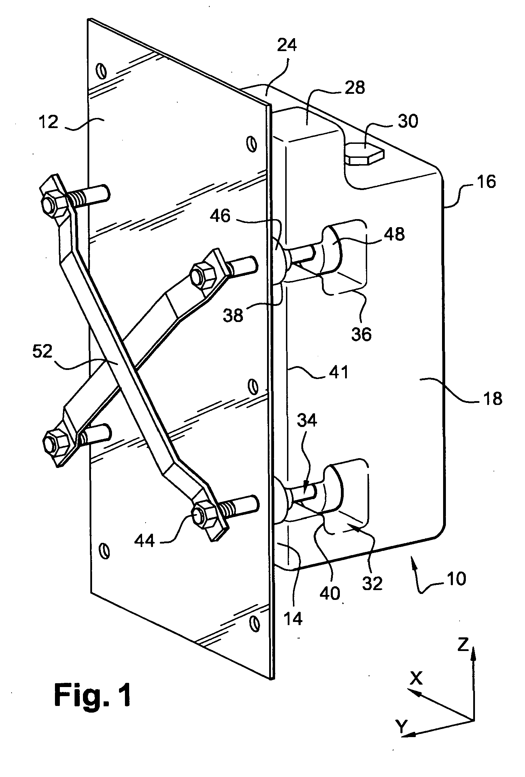

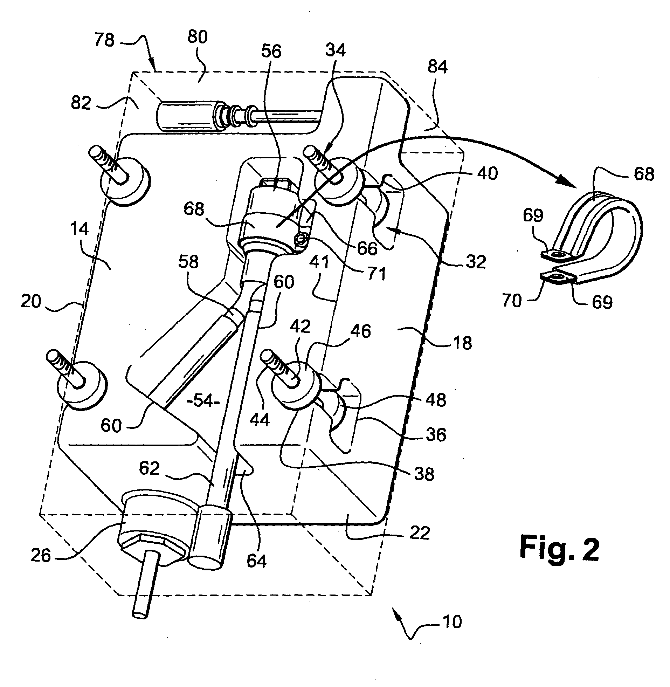

Comme on peut le voir sur le mode de réalisation des figures 1 et 2, l'extrémité 36 de la cavité 32 débouchant sur la face latérale 18, c'est-à-dire l'intersection entre la cavité 32 et la face latérale 18, appelée extrémité latérale 36, a un contour ayant une forme générale de T ou de champignon coupé dans sa direction longitudinale. En outre, l'extrémité 38 de la cavité 32 débouchant sur la face d'appui 14, appelée extrémité d'appui 38, a un contour ayant une forme générale de C. Les extrémités latérale 36 et d'appui 18 s'étendent chacune jusqu'à l'arête 41 du réservoir 10 formée par la première face latérale 18 et la face d'appui 14. Ainsi, on peut insérer l'organe de fixation 34 dans la cavité 32 selon la direction X, orthogonale à la face latérale 18. Selon cette configuration de la cavité 32, la cavité constitue une coque de protection de l'organe de fixation 34 qu'elle reçoit, cette coque recouvrant complètement l'organe 34 dans le plan (X ; Z) orthogonal à la direction d'appui Y du réservoir.

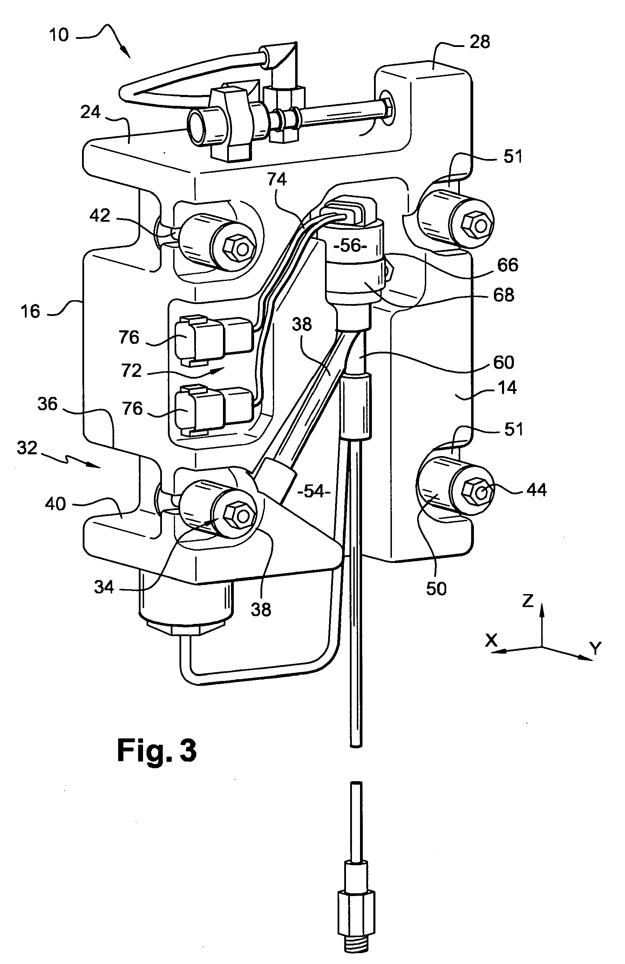

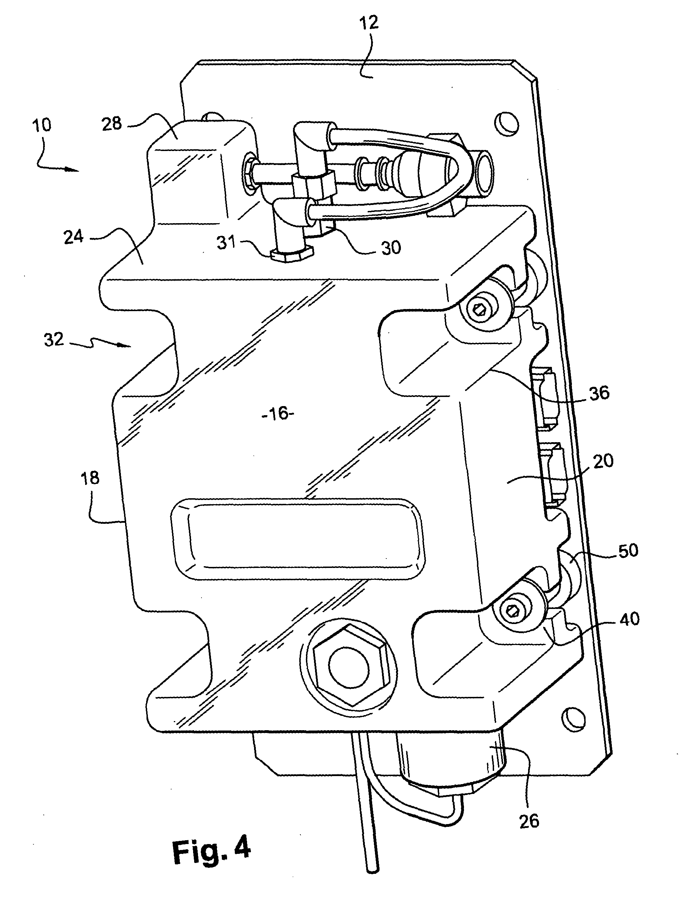

Comme on peut le voir sur la variante des figures 3 et 4, la cavité de fixation 32 peut déboucher également sur la face avant 16 du réservoir, ce qui permet, outre l'insertion de l'organe 34 selon la direction X, une insertion de l'organe 34 par l'avant, dans la direction d'appui Y. En outre, la forme en X du contour de l'extrémité latérale 36 de la cavité 32 peut être plus facile à réaliser par moulage que la forme en T ou en champignon de la variante des figures 1 et 2.

Comme on peut le voir sur chacune des figures 1 à 4, la cavité de réception 32 comprend un siège 40 assurant la rétention de l'organe de fixation 34 dans la direction d'appui Y du réservoir. Les organes de fixation 34 comprennent chacun une extrémité 34, dépassant de la face d'appui du réservoir, comprenant une tige filetée 42, de façon à recevoir un boulon une fois qu'elle est insérée dans un orifice du support 12. L'autre extrémité de l'organe de fixation 34 repose sur le siège 40 de façon à retenir l'organe 34 dans la cavité.

Par ailleurs, les organes de fixation 34 comportent des moyens anti-vibratoires, comprenant deux plots 46, 48 en élastomère sur les figures 1 et 2, et un plot 50 en élastomère sur les figures 3 et 4, chacun des plots 46, 48 et 50 étant traversé par la tige 42 de façon à être agencé entre l'organe de fixation 34 et le réservoir 10.

Les plots 46, 48 des figures 1 et 2 sont séparés mais pourraient également être reliés entre eux par un manchon en élastomère entourant la tige 42, de façon à être monoblocs, ce qui pourrait être plus économique. Le premier plot 48 repose sur le siège 40 de la cavité de fixation 32, et le second plot 46 est agencé entre un siège d'appui ménagé sur la face d'appui 14 (plus précisément un siège ménagé sur le contour de l'extrémité d'appui 38) et le support 12.

Le plot 50 des figures 3 et 4 est agencé entre un siège d'appui 51 ménagé dans la cavité 32 au voisinage de la face d'appui 14 et le support 12. Comme on peut le voir sur la figure 4, ce plot 50 est également reçu (partiellement ou intégralement) dans la cavité de fixation, de façon à encore augmenter la compacité du réservoir 10 et diminuer son encombrement dans la direction Y. Le plot peut même être encastré dans la cavité 32, de façon à immobiliser l'organe 34 dans la cavité 32, et donc encore diminuer les vibrations.

On comprendra que les agencements des moyens anti-vibratoires 46, 48, 50 entre le réservoir 10 et le support 12 représentés sur les figures ne sont que des exemples parmi beaucoup de possibilités. On peut en particulier intervertir les plots des figures 1 et 2 et ceux des figures 3 et 4.

Comme on peut le voir sur les figures 1 et 4, les cavités de fixation 32 sont agencées de façon que les organes de fixation 34 délimitent un carré, ce qui a pour avantage de pouvoir assembler la plaque support 12 et le réservoir 10 selon deux orientations distinctes. En effet, la plaque 12, de forme oblongue, peut être assemblée dans l'orientation illustrée sur les figures 1 et 4, mais pourrait également être orientée différemment, par exemple en subissant une rotation d'un quart de tour par rapport au centre 52. En outre, la plaque de support 12 comporte plus de quatre orifices de fixation des organes 34. On dispose ainsi d'une multiplicité de positions de la plaque 12 par rapport au réservoir 10, si bien que le réservoir 10 peut être intégré dans tout type de véhicule sans avoir à adapter la forme du réservoir à la forme de l'espace disponible sur un modèle particulier de véhicule.

Comme on peut le voir sur les figures 2 et 3, le réservoir 10 comprend une cavité de pompe 54, débouchant sur sa face d'appui 14, et recevant une pompe 56 apte à prélever du liquide stocké dans le réservoir 10. Ainsi, cette cavité 54, lorsque le réservoir 10 est en appui contre le support 12, forme une coque quasiment fermée de protection de la pompe 56. Grâce aux moyens anti-vibratoires 46, 48, 50, cette pompe 56 ne subit pas les vibrations du moteur du véhicule, si bien que sa durée de vie est prolongée. La pompe 56 comprend une extrémité 58 de prélèvement du liquide dans le réservoir, via un orifice ménagé dans le réservoir, et une extrémité 60 d'injection de ce liquide dans un filtre à particules, relié au filtre grâce à un câble hydraulique 62 qui passe à travers une extrémité latérale inférieure 64 de la cavité de pompe 54, la cavité de pompe 54 débouchant sur la face latérale inférieure 22.

La cavité de pompe 54 comprend des moyens de fixation d'un collier 68 de fixation de la pompe 56 dans la cavité 54, en particulier un relief 66 pour la réception de ce collier. Le collier 68, visible plus précisément sur la figure 2, est une bande circulaire entourant la pompe 56, dont les deux extrémités 69 comportent un orifice 70 pour la réception d'un organe de liaison 71, cet organe de liaison 71 étant en outre fixé sur le relief 66 de la cavité de pompe 54. On notera que l'organe de fixation 71 pourrait être fixé directement dans le fond de la cavité de pompe 54, sans que celle-ci ne présente de relief particulier. En tout état de cause, le collier 68 est intégralement reçu dans la cavité de pompe 54, sans être en saillie du réservoir 10.

Selon la variante particulièrement intéressante représentée sur les figures 3 et 4, le réservoir 10 comporte en outre une cavité de câblage 72, permettant de recevoir des câblages électriques 74 et deux connecteurs 76, si bien que l'on peut également loger dans le réservoir 10 les câbles 74 d'alimentation de la pompe 66 et les connecteurs 76 permettant de connecter la pompe 76 à la batterie du véhicule.

Grâce à l'ensemble des cavités de pompe et/ou de câblage, on dispose d'un réservoir avec un encombrement minimum, la pompe 56, les câblages 74 et les connecteurs 76 arrivant à affleurement avec la face d'appui 14 du réservoir.

Comme cela est représenté sur la figure 2, et s'applique également au réservoir des figures 3 et 4, le réservoir 10 est intégralement contenu dans un parallélépipède fictif 78, que l'on pourrait définir comme le parallélépipède circonscrit du réservoir, dont une face 80 comprend la face d'appui 14 et deux autres faces 82, 84 comprennent les faces latérales 18, 20. En outre, même lorsque le réservoir reçoit la pompe 56, les éventuels câblages 74 et connecteurs 76, et les organes de fixation 34, le réservoir est également contenu dans ce parallélépipède 78, à l'exception des tiges de fixation 42 destinées à traverser le support 12, qui sont en saillie du parallélépipède 78.

On comprend, à partir de la description qui précède, que le réservoir 10 obtenu est particulièrement compact, du fait qu'il intègre un maximum de fonctionnalités tout en occupant un volume minimal. En particulier, le réservoir 10 ne présente pas, sur ses faces latérales verticales 18, 20, de saillies susceptibles d'augmenter l'encombrement du réservoir. En effet, l'ensemble des cavités définies ci-dessus sont rentrantes par rapport aux surfaces extérieures du réservoir, tels des évidements.

On notera que l'invention n'est pas limitée au mode de réalisation précédemment décrit. En particulier, on peut prévoir d'utiliser l'orifice de vidange 26 pour assurer les fonctions d'un orifice de nettoyage ou encore d'un orifice de fixation d'un détecteur de niveau du réservoir. Par ailleurs, certaines ou l'ensemble des différences présentées sur le réservoir des figures 3 et 4 pourraient être agencées sur celui des figures 1 et 2, et vice-versa.

## Revendications

1. Réservoir (10) pour véhicule automobile, **caractérisé en ce qu'**il comporte une face d'appui (14) du réservoir (10) contre un support (12) du véhicule et une face latérale (18, 20) adjacente à la face d'appui (14), le réservoir (10) comportant en outre une cavité (32) pour la réception d'un organe de fixation (34) du réservoir sur le véhicule, configurée de façon que :
- la cavité (32) débouche sur la face latérale (18, 20) du réservoir, et
- la cavité (32) débouche également sur la face d'appui (14), pour permettre à l'organe de fixation (34) de dépasser de la face d'appui (14), en étant retenu dans la cavité (32),
- la cavité de fixation (32) comprend un siège (40) assurant la rétention de l'organe de fixation (34) dans la direction (Y) d'appui du réservoir.

2. Réservoir selon la revendication 1, dans lequel la cavité de fixation (32) débouche également sur une face (16) du réservoir opposée à la face d'appui (14).

3. Réservoir selon l'une quelconque des revendications 1 ou 2, comprenant, de préférence sur sa face d'appui (14), une cavité (54), dite "cavité de pompe", pour la réception d'une pompe (56) apte à prélever du liquide dans le réservoir (10).

4. Réservoir selon la revendication 3, dans lequel la cavité de pompe (54) comprend des moyens de fixation (66) d'un collier (68) de fixation de la pompe (56) dans la cavité (54).

5. Réservoir selon l'une quelconque des revendications 1 à 4, comportant en outre une cavité (72), dite "cavité de câblage", pour la réception de câblages électriques ou hydrauliques (74), et éventuellement pour la réception de connecteurs (76).

6. Réservoir selon l'une quelconque des revendications 1 à 5, comprenant une première (18) et une deuxième (20) faces latérales, toutes deux adjacentes à la face d'appui (14), comprenant au moins quatre cavités de fixation (32), débouchant chacune sur la face d'appui (14) et l'une des première (18) ou deuxième (20) faces latérales.

7. Réservoir selon l'une quelconque des revendications 1 à 6, servant de réservoir d'additif pour filtre à particules, destiné à être monté sur un véhicule industriel.

8. Ensemble d'un réservoir selon l'une quelconque des revendications 1 à 7 et d'un organe de fixation (34), dans lequel l'organe de fixation (34) arrive à affleurement avec la face latérale (18, 20), et éventuellement avec la face avant (14) du réservoir (10).

9. Ensemble selon la revendication 8, comprenant en outre des moyens anti-vibratoires, agencés entre l'organe de fixation (34) et le réservoir (10).

10. Ensemble selon la revendication 9, dans lequel l'organe de fixation (34) comprend une tige (42) dont une extrémité (44) est destinée à traverser le support (12), la tige (42) étant traversée par au moins un plot anti-vibratoire (46, 50), en matériau élastomère, destiné à être agencé entre un siège d'appui (14, 51) et le support (12).

11. Ensemble d'un réservoir selon l'une quelconque des revendications 1 à 7 et d'une pompe (56), dans lequel la pompe (56) arrive à affleurement avec une face du réservoir, de préférence la face d'appui (14).

12. Ensemble d'un réservoir selon l'une quelconque des revendications 1 à 7 et de câblages électriques ou hydrauliques (74), dans lequel les câblages (74) arrivent à affleurement avec une face du réservoir (10), de préférence la face d'appui (14).

## Claims

1. A motor vehicle tank (10), **characterized in that** the tank (10) includes a bearing face (14) for bearing against a support (12) of the vehicle, and a side face (18, 20) adjacent to the bearing face (14), the tank (10) also including a cavity (32) for receiving a fastener member (34) for fastening the tank to the vehicle, the side face being configured in such a manner that:
• the cavity (32) opens out in the side face (18, 20) of the tank;
• the cavity (32) also opens out in the bearing face (14), to enable the fastener member (34) to project beyond the bearing face (14), while being held in the cavity (32); and
• the fastener cavity (32) includes a seat (40) for retaining the fastener member (34) in the bearing direction (Y) of the tank.

2. A tank according to claim 1, wherein the fastener cavity (32) also opens out into a face (16) of the tank that is opposite from its bearing face (14).

3. A tank according to claim 1 or claim 2, including a cavity (54), referred to as a "pump cavity", preferably in its bearing face (14), for receiving a pump (56) suitable for taking liquid from the tank (10).

4. A tank according to claim 3, wherein the pump cavity (54) includes fastener means (66) for fastening a fastener collar (68) for fastening the pump (56) in the cavity (54).

5. A tank according to any one of claims 1 to 4, further including a cavity (72), referred to as a "cabling cavity", for receiving electrical or hydraulic cabling (74), and optionally for receiving connectors (76).

6. A tank according to any one of claims 1 to 5, having first and second side faces (18, 20), both adjacent to the bearing face (14), including at least four fastener cavities (32), each opening out into the bearing face (14) and into one of the first and second side faces (18, 20).

7. A tank according to any one of claims 1 to 6, used as an additive tank for a particle filter, and intended for mounting on an industrial vehicle.

8. An assembly comprising a tank according to any one of claims 1 to 7 and a fastener member (34), wherein the fastener member (34) lies flush with the side face (18, 20), and optionally with the bearing face (14) of the tank (10).

9. An assembly according to claim 8, further comprising anti-vibration means arranged between the fastener member (34) and the tank (10).

10. An assembly according to claim 9, wherein the fastener member (34) comprises a rod (42) having one end (44) for passing through the support (12), the rod (42) passing through at least one anti-vibration stud (46, 50) of elastomer material for placing between a bearing seat (14, 51) and the support (12).

11. An assembly comprising a tank according to any one of claims 1 to 7 and a pump (56), wherein the pump (56) lies flush with a face of the tank, preferably the bearing face (14).

12. An assembly of a tank according to any one of claims 1 to 7, and electrical or hydraulic cabling (74), wherein the cabling (74) lies flush with a face of the tank (10), preferably the bearing face (14).

## Patentansprüche

1. Behälter (10) für ein Kraftfahrzeug, **dadurch gekennzeichnet, dass** er eine Fläche (14) zur Lagerung des Behälters (10) gegen einen Träger (12) des Fahrzeugs und eine an die Lagerungsfläche (14) angrenzende Seitenfläche (18, 20) aufweist, wobei der Behälter (10) weiterhin eine Höhlung (32) zwecks Aufnahme eines Elements (34) zur Befestigung des Behälters am Fahrzeug aufweist, die so ausgebildet ist, dass:
- die Höhlung (32) in die Seitenfläche (18, 20) des Behälters mündet, und
- die Höhlung (32) auch in die Lagerungsfläche (14) mündet, um zu ermöglichen, dass das Befestigungselement (34) aus der Lagerungsfläche (14) hervorragt, wobei es in der Höhlung (32) festgehalten wird,
- die Befestigungshöhlung (32) einen Sitz (40) umfasst, der das Festhalten des Befestigungselements (34) in Lagerungsrichtung (Y) des Behälters gewährleistet.

2. Behälter nach Anspruch 1, wobei die Befestigungshöhlung (32) auch in eine Fläche (16) des Behälters mündet, die der Lagerungsfläche (14) gegenüberliegt.

3. Behälter nach Anspruch 1 oder 2, der, vorzugsweise auf seiner Lagerungsfläche (14), eine Höhlung (54), genannt "Pumpenhöhlung", zwecks Aufnahme einer Pumpe (56) umfasst, die sich zum Entnehmen von Flüssigkeit im Behälter (10) eignet.

4. Behälter nach Anspruch 3, wobei die Pumpenhöhlung (54) Mittel (66) für die Befestigung einer Schelle (68) zur Befestigung der Pumpe (56) in der Höhlung (54) umfasst.

5. Behälter nach einem der Ansprüche 1 bis 4, der weiterhin eine Höhlung (72), genannt "Verkabelungshöhlung", aufweist zwecks Aufnahme elektrischer oder hydraulischer Verkabelungen (74), und gegebenenfalls zwecks Aufnahme von Verbindern (76).

6. Behälter nach einem der Ansprüche 1 bis 5, umfassend eine erste (18) und eine zweite (20) Seitenfläche, beide angrenzend an die Lagerungsfläche (14), mit zumindest vier Befestigungshöhlungen (32), die jeweils in die Lagerungsfläche (14) und in eine von der ersten (18) und der zweiten (20) Seitenfläche münden.

7. Behälter nach einem der Ansprüche 1 bis 6, der als Behälter von Additiv für Partikelfilter dient, der zur Anbringung an einem Nutzfahrzeug bestimmt ist.

8. Anordnung aus einem Behälter nach einem der Ansprüche 1 bis 7 und einem Befestigungselement (34), wobei das Befestigungselement (34) auf eine Höhe mit der Seitenfläche (18, 20) und gegebenenfalls mit der Vorderfläche (14) des Behälters (10) kommt.

9. Anordnung nach Anspruch 8, die weiterhin schwingungsdämpfende Mittel umfasst, die zwischen dem Befestigungselement (34) und dem Behälter (10) angeordnet sind.

10. Anordnung nach Anspruch 9, wobei das Befestigungselement (34) einen Stift (42) umfasst, dessen eines Ende (44) dazu bestimmt ist, durch den Träger (12) hindurchzugehen, wobei der Stift (42) von zumindest einem Schwingungspuffer (46, 50), aus Elastomermaterial, durchquert wird, der zur Anordnung zwischen einem Lagerungssitz (14, 51) und dem Träger (12) bestimmt ist.

11. Anordnung aus einem Behälter nach einem der Ansprüche 1 bis 7 und einer Pumpe (56), wobei die Pumpe (56) auf eine Höhe mit einer Fläche des Behälters, vorzugsweise der Lagerungsfläche (14), kommt.

12. Anordnung aus einem Behälter nach einem der Ansprüche 1 bis 7 und elektrischen oder hydraulischen Verkabelungen (74), wobei die Verkabelungen (74) auf eine Höhe mit einer Fläche des Behälters (10), vorzugsweise der Lagerungsfläche (14), kommen.
